# EUROPEAN PATENT APPLICATION

(11) **EP 4 455 226 A1**
(43) Date of publication of application: **30.10.2024**
(21) Application number: 23169677.4
(22) Date of filing: 25.04.2023
(51) Int. Cl.: C09D 5/00

(54) **WATER-BASED THERMALLY DEBONDABLE PRIMER COMPOSITION**

(71) Applicant: Henkel AG & Co. KGaA, 40589 Düsseldorf (DE)
(72) Inventor: Franken, Uwe, 41542 Dormagen (DE); O'Dwyer, Pat, Newcastle, Co. Dublin, D22KP70 (IE); Migliore, Nicola, 40227 Düsseldorf (DE); Kohlstrung, Rainer, 68723 Plankstadt (DE)

(57) **Abstract**

The present invention relates to a thermally debondable primer composition comprising a) from 28 to 70% by weight based on the total weight of the composition of an acrylate resin; b) from 28 to 70% by weight based on the total weight of the composition of water; c) from 1 to 25% by weight based on the total weight of the composition of thermally expandable thermoplastic microspheres; and d) from 0 to 5% by weight based on the total weight of the composition of a coalescing solvent. The primer composition according to the present invention can be used in bonded structures such as automotive components (a battery, a casque and interior parts).

## Description

### Technical field

The present invention relates to a water-based thermally debondable primer composition comprising thermally expandable thermoplastic microspheres.

### Technical background

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature might be effective but can be time consuming and complex to perform: moreover, the aggressive chemicals and/or harsh conditions required can damage the substrates being separated, rendering them unsuitable for subsequent applications.

As an exemplary case, it is evidently desirable to remove, replace and / or recycle components of automotive industry, such as electric car battery cells and casque, which have been attached within the devices using adhesives. However, such adhesives are typically strong in that they are designed to maintain adhesion both during drop or impact events and across a wide range of operating temperatures and other environmental conditions. If care is not taken, adhesive-bonded device components can therefore be damaged or destroyed when removing the components through mechanical processes or the application of chemicals.

Certain authors have sought to develop debondable adhesive compositions wherein the applied heat is used to disrupt the bonding at the interface of the adhesive and the substrate. The problem with the thermal debonding is that if a care is not taken, high temperatures may damage the substrates. Further, use of thermally expandable microspheres may have a negative impact on mechanical and adhesion strength properties of the adhesive.

Noting these problems, certain authors have also sought to develop debondable adhesive compositions, wherein the passage of an electrical current through the cured compositions acts to disrupt the bonding at the interface of the adhesive and the substrate.

Therefore, there remains a need in the art to provide means to effectively debond bonded substrates while maintaining optimum adhesion and mechanical properties of the adhesive.

### Short description of the figures

Figure 1 Illustrates tensile lap shear strength of LOCTITE EA 9470 and the primer composition of example 1 on e-coated steel substrates in the range of temperature from -40°C to 80°C. On the top right of the figure is an example of the adhesive failure of one of the specimens during the test.
Figure 2 Illustrates comparison at room temperature (23°C) of tensile lap shear test for LOCTITE EA 9470 and the primer composition of example 1 before and after thermal treatment (60 min at each temperature).
Figure 3 illustrates comparison of tensile lap shear strength of e-coated steel substrates having the primer composition of example 1 and bonded with LOCTITE EA 9470 (black), TEROSON EP 5056 (dark grey), and LOCTITE EA 9394 (light grey).
Figure 4 illustrates comparison of tensile lap shear strength of e-coated steel substrates having the primer composition of example 1 and bonded with four different commercial adhesives vs. bonding with commercial adhesive only.

### Summary of the invention

The present invention relates to a thermally debondable primer composition comprising a) from 28 to 70% by weight based on the total weight of the composition of an acrylate resin; b) from 28 to 70% by weight based on the total weight of the composition of water; c) from 1 to 25% by weight based on the total weight of the composition of thermally expandable thermoplastic microspheres; and d) from 0 to 5% by weight based on the total weight of the composition of a coalescing solvent.

The present invention also relates to a cured thermally debondable primer composition according to the present invention.

The present invention relates to use of thermally debondable primer composition or cured product according to the present invention in a bonded structure.

The present invention encompasses a bonded structure comprising: a first substrate; a second substrate; a thermally debondable primer composition layer or cured product layer according to the present invention; and an adhesive layer, wherein the thermally debondable primer layer is disposed on a surface of the first substrate and/or on a surface of the second substrate and wherein the adhesive layer is placed on top of the thermally debondable primer layer.

The present invention also encompasses a method of debonding said bonded structure according to the present invention, the method comprising the steps of: i) applying a heat; and, ii) debonding the surfaces.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term *"consisting of"* excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term *"one component (1K) composition"* refers to a composition where, during storage of the composition, the composition components are all admixed together but the properties of the composition, including viscosity, remain consistent enough over the time of storage to permit successful utility of the composition at a later time.

*"Two-component (2K) compositions"* are understood to be compositions in which a first component/part and a second component/part must be stored in separate vessels because of their (high) reactivity. The two components/parts are mixed only shortly before application and then react, typically without additional activation, with bond formation and thereby formation of a polymeric network. Herein higher temperatures may be applied in order to accelerate the cross-linking reaction.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a thermally debondable primer composition comprising a) from 28 to 70% by weight based on the total weight of the composition of an acrylate resin; b) from 28 to 70% by weight based on the total weight of the composition of water; c) from 1 to 25% by weight based on the total weight of the composition of thermally expandable thermoplastic microspheres; and d) from 0 to 5% by weight based on the total weight of the composition of a coalescing solvent.

The thermally debondable primer composition according to the present invention can be used in a combination with a structural adhesive. The primer is applied on a surface of a substrate or on surfaces of the substrates, subsequently a structural adhesive is applied on top of the primer layer and the substrates are bonded together. The bonded structure takes load on the bond during the lifetime of the bonded structure and remains intact. Once there is a need to debond the bonded structure, heat is applied and elevated temperature induces debonding and the adhesive bond separates.

The applicant has found that upon heat activation, the primer composition according to the present invention has significant reduction in bond strength to debond. Therefore, use of the primer composition according to the present invention as a debonding vehicle, enables that the adhesion strength of the structural adhesive is not adversely affected. The debondable primer according to the present invention has a wide temperature range wherein the debonding takes a place and therefore, the temperature can be optimised to not to influence material and device such as a battery performance. Further, the water-based primer can be easily removed after heat activation to be able to re-use the debonded substrates.

The thermally debondable primer composition according to the present invention comprises an acrylate resin.

An acrylate resin may be added to the composition according to the present as a resin or as a water dispersion.

The suitable acrylate resin for use in the present invention may comprise one or more copolymerized ethylenically unsaturated monomers. Preferably, suitable ethylenically unsaturated monomer is selected from the group consisting of methyl acrylate, ethyl acrylate, butyl acrylate, 2-ethylhexyl acrylate, nonyl acrylate, decyl acrylate, lauryl acrylate, hydroxyethyl acrylate, hydroxypropyl acrylate, methyl methacrylate, ethyl methacrylate, butyl methacrylate, nonyl methacrylate, isodecyl methacrylate, lauryl methacrylate, hydroxyethyl methacrylate, hydroxypropyl methacrylate, (meth)acrylonitrile, styrene, substituted styrene, butadiene, ethylene, propylene, 1-decene, vinyl acetate, vinyl butyrate, vinyl versatate, vinyl chloride and vinylidene chloride, and mixtures thereof.

In a highly preferred embodiment, the ethylenically unsaturated monomer is selected from the group consisting of methyl acrylate, ethyl acrylate, butyl acrylate, 2-ethylhexyl acrylate, nonyl acrylate, decyl acrylate, lauryl acrylate, hydroxyethyl acrylate, hydroxypropyl acrylate, methyl methacrylate, ethyl methacrylate, butyl methacrylate, nonyl methacrylate, isodecyl methacrylate, lauryl methacrylate, hydroxyethyl methacrylate, hydroxypropyl methacrylate, (meth)acrylonitrile, and mixtures thereof.

In another highly preferred embodiment the ethylenically unsaturated monomer is a combination of (meth)acrylic ester monomer and styrene, wherein the (meth)acrylic ester monomer is selected from the group consisting of methyl acrylate, ethyl acrylate, butyl acrylate, 2-ethylhexyl acrylate, nonyl acrylate, decyl acrylate, lauryl acrylate, hydroxyethyl acrylate, hydroxypropyl acrylate, methyl methacrylate, ethyl methacrylate, butyl methacrylate, nonyl methacrylate, isodecyl methacrylate, lauryl methacrylate, hydroxyethyl methacrylate, hydroxypropyl methacrylate, (meth)acrylonitrile, and mixtures thereof.

Suitable commercially available acrylate resins for use in the present invention include but are not limited to Maincote 1100, Maincote HG 100, Maincote HG 300 resins from Dow.

The acrylate resin is present in a thermally debondable primer composition according to the present invention in a quantity from 28 to 70% by weight based on the total weight of the composition, preferably from 38 to 60%, more preferably from 42 to 49.5%, and even more preferably from 45 to 49.5%.

The above defined and preferred ranges are ideal for film formation and maintaining the composition water based. Quantities below 28% may lead to poor film formation.

The thermally debondable primer composition according to the present invention is a water-based composition. Water may be added to the primer composition separately or it may be added within the acrylate resin dispersion. The primer composition according to the present invention would also work as a solvent-based primer, however water-based primer is preferred being environmentally friendly.

Water is present in a thermally debondable primer composition according to the present invention in a quantity of from 28 to 70% by weight based on the total weight of the composition of, preferably from 38 to 60%, more preferably from 42 to 49.5%, and even more preferably from 45 to 49.5%.

The above defined and preferred ranges are ideal for film formation and maintaining the composition water based. Quantities below 28% may lead to poor film formation.

The thermally debondable primer composition according to the present invention comprises thermally expandable thermoplastic microspheres.

Suitable thermally expandable thermoplastic microspheres have a core-shell structure, and wherein the shell is formed from cross-linked polymer and the core is composed of a blowing agent.

Suitable cross-linked polymer may be prepared by (co)polymerization of any suitable monomers or comonomers. Suitable monomer that can be used for preparing the polymer includes non-ionic ethylenically unsaturated monomers.

Suitable non-ionic ethylenically unsaturated monomers for use in the present invention can be selected from the group consisting of styrene, vinyltoluene, ethylene, butadiene, vinyl acetate, vinyl chloride, vinylidene chloride, acrylonitrile, acrylamide, methacrylamide, C1-C20 alkyl or C2-C20 alkenyl esters of acrylic or methacrylic acid, methacrylate, methyl methacrylate, ethyl acrylate, ethyl methacrylate, butyl acrylate, butyl methacrylate, 2-ethylhexyl acrylate, 2-ethylhexyl methacrylate, benzyl acrylate, benzyl methacrylate, lauryl acrylate, lauryl methacrylate, oleyl acrylate, oleyl methacrylate, palmityl acrylate, palmityl methacrylate, stearyl acrylate, stearyl methacrylate, hydroxyl-containing monomers, in particular C1-C10 hydroxyalkyl (meth)acrylates, such as hydroxyethyl (meth)acrylate, hydroxypropyl (meth)acrylate, glycidyl (meth)acrylate, preferably methyl methacrylate and mixtures thereof.

Suitable polymer may also be a copolymer prepared by the copolymerization of two or more monomers listed above. Preferred monomer combinations include acrylonitrile/methyl (meth)acrylate, styrene/methyl (meth)acrylate, acrylamide/methyl (meth)acrylate, acrylonitrile/hydroxyethyl (meth)acrylate. More preferably combination is acrylonitrile/methyl methacrylate.

Suitable crosslinking agents for use in the present invention for the crosslinking of the polymer are compounds having two or more ethylenically unsaturated groups, for example diacrylates or dimethacrylates of at least dihydric saturated alcohols, e.g., ethylene glycol diacrylate, ethylene glycol dimethacrylate, 1 ,2-propylene glycol diacrylate, 1 ,2-propylene glycol dimethacrylate, 1 ,4-butanediol diacrylate, 1 ,4-butanediol dimethacrylate, hexanediol diacrylate, hexanediol dimethacrylate, neopentylglycol diacrylate, neopentylglycol dimethacrylate, 3-methylpentanediol diacrylate and 3-methylpentanediol dimethacrylate. A further class of crosslinkers comprises diacrylates or dimethacrylates of polyethylene glycols or polypropylene glycols having molecular weights of 200 to 9000 in each case. Polyethylene and/or polypropylene glycols used for preparing the diacrylates or dimethacrylates preferably have a molecular weight of 400 to 2000 each. Not only the homopolymers of ethylene oxide and/or propylene oxide can be used, but also block copolymers of ethylene oxide and propylene oxide, or random copolymers of ethylene oxide and propylene oxide, which comprise a random distribution of the ethylene oxide and propylene oxide units. Similarly, the oligomers of ethylene oxide and/or propylene oxide are useful for preparing the crosslinkers, examples being diethylene glycol diacrylate, diethylene glycol dimethacrylate, triethylene glycol diacrylate, triethylene glycol dimethacrylate, tetraethylene glycol diacrylate and/or tetraethylene glycol dimethacrylate.

Crosslinkers are preferably used in amounts of 0.1 to 30 wt%, based on the monomers to be polymerized in any one stage.

The core is preferably composed of physical blowing agent. Suitable physical blowing agent includes alkanes and/or cycloalkanes with at least 4 carbon atoms, dialkyl ethers, esters, ketones, acetals, fluoroalkanes with 1 to 8 carbon atoms, and tetraalkylsilanes with 1 to 3 carbon atoms in the alkyl chain, in particular tetramethylsilane.

Examples of suitable blowing agents usable according to the invention, propane, n-butane, iso- and cyclobutane, n-, iso- and cyclopentane, cyclohexane, dimethyl ether, methyl ethyl ether, methyl butyl ether, methyl formate and acetone may be mentioned, and also fluoroalkanes which can be degraded in the troposphere and thus are harmless to the ozone layer, such as trifluoromethane, difluoromethane, 1,1,1,3,3-pentafluorobutane, 1,1,1,3,3-pentafluoropropane, 1,1,1,2-tetrafluoroethane, difluoroethane and 1,1,1,2,3,3,3-heptafluoropropane, and perfluoroalkanes such as CsFs, C₄F₁₀, C₅F₁₂, CeFi4 and C₇F₁₆. Said blowing agents can be used alone or in any combination with one another.

Further, hydrofluoro olefins, such as 1,3,3,3-tetrafluoropropene, or hydrochlorofluoro olefins, such as 1-chloro-3,3,3-trifluoropropene, can be used as blowing agents.

In a preferred embodiment, the physical blowing agents are hydrocarbons, preferably, selected from the group consisting of alkanes and/or cycloalkanes with at least 4 carbon atoms. In particular, pentanes, preferably isopentane and cyclopentane, are used. With the use of the rigid foams as insulation in cooling appliances, cyclopentane is preferred. The hydrocarbons can be used in mixture with water.

The thermally expandable microspheres can be prepared by seed swelling of the crosslinked polymer and encapsulation of the blowing agents.

The thermally expandable thermoplastic microspheres have a particle size from 5 to 100 µm, preferably from 8 to 75 µm, preferably from 9 to 50 µm, more preferably from 10 to 30 µm, more preferably from 12 to 20 µm, and even more preferably from 13 to 19 µm, wherein the particle size is measure by laser diffraction (Low Angle Laser Light Scattering LALLS).

The above-defined particle size ranges are sizes before the expansion.

The thermally expandable thermoplastic microspheres expand when they are exposed to a heat, preferably when exposed to a heat of from 60 to 200°C, preferably from 80 to 160 °C, more preferably from 80 to 120°C.

The heat source may be for example a thermal source, a sonication probe or an electromagnetic source.

The thermally expandable thermoplastic microspheres are present in a thermally debondable primer composition according to the present invention in a quantity of from 1 to 25% by weight based on the total weight of the composition of, preferably from 2 to 15%.

The above defined and preferred ranges are ideal to break the bond line while maintaining low solid content in the composition. Quantities less than 1% may not lead to a complete bond break, whereas too high quantities may increase the solid content too high without providing any additional technical benefit.

The thermally debondable primer composition according to the present invention may comprise a coalescing solvent. Coalescent solvents are preferred because they help the film formation.

The coalescing solvent is preferably present in the composition wherein the resin has higher minimum film forming temperature (MFFT). In this case, the presence of the coalescing solvent may prevent formation of a brittle film.

Suitable coalescing solvent can be selected from the group consisting of dipropylene glycol n-butylether, propylene glycol n-butyl ether, propylene glycol n-propyl ether, propylene glycol phenyl ether, ethylene glycol hexyl ether, diethylene glycol hexyl ether, 2,2,4-trimethyl-1,3-pentanediol monoisobutyrate, propylene glycol methyl ether, ethylene glycol n-butyl ether, and mixture thereof, preferably the coalescing solvent is dipropylene glycol n-butylether.

The above listed coalescing solvents are preferred because they provide good film forming properties.

The coalescing solvent may be present in a thermally debondable primer composition according to the present invention in a quantity of from 0 to 5% by weight based on the total weight of the composition, preferably from 0.25 to 3.0%, more preferably from 0.25 to 2.0% and even more preferably from 0.25 to 1.5%.

The above defined and preferred ranges are ideal to film formation and may improve adhesion properties. Too high quantities may weaken the film by also providing a plasticiser effect.

The thermally debondable primer composition according to the present invention may further comprise adjuvants and additives that can impart improved properties to this composition. For instance, the adjuvants and additives may impart one or more of: improved elastic properties; improved elastic recovery; longer enabled processing time; faster curing time; film forming properties, and lower residual tack.

Adjuvants and additives for use in the present invention may be selected from the group consisting of fillers, adhesion promotors, extenders, dye, binders, crosslinkers, stabilizers, additional solvents, rheology modifiers, dispersing agents, fungicides, bactericides, algaecides and mixtures thereof.

Suitable adhesion promoters for use in the present invention are for example phosphoric acid derivatives such as 2-hydroxyethyl methacrylate phosphate.

Suitable filler for use in the present invention is for example titanium oxide.

Extenders suitable for use in the present invention are used to improve adhesion and strengthen the film. Non limiting examples of suitable extenders for use in the present invention are aluminium silicate, silica, barium sulphate, manganese aluminium silicate, sodium magnesium aluminium silicate, calcium carbonate, calcium sulphate, diatomaceous earth, carbon black, mica and mixtures thereof.

Suitable additional solvent for use in the present invention is mainly a co-solvent for water to improve liquid properties and drying characteristics of the primer composition. Suitable solvent for use in the present invention is for example isopropyl alcohol.

Suitable cross linkers may be used to modify the properties of the primer composition, for example to improve environmental resistance. Suitable cross linkers for use in the present invention are for example isocyanates, aziridines and cyanurates.

Suitable dispersants can be used to separate and stabilise the particles. Suitable dispersant for use in the present invention for example hydrophobic acrylic copolymer pigment dispersant such as Orotan 681 from Dow.

Such adjuvants and additives can be used in such combination and proportions as desired, provided they do not adversely affect the nature and essential properties of the composition. While exceptions may exist in some cases, these adjuvants and additives should not in toto comprise more than 30 wt.% of the total composition and preferably should not comprise more than 10 wt.% of the composition.

The thermally debondable primer composition according to the present invention may be prepared by adding all components a container and mixing for example by a speed mixer.

The thermally debondable primer composition according to the present invention may be applied on to the surface of the substrate by any available means to form a film. The primer composition may be applied by using a brushing technique or by using a bar-coater with a guide. The guide of the bar-coater may be 50-micron, 100-micron or even beyond 200-micron guide, preferably, the primer composition is applied by using a bar-coater with 100-micron guide.

Thickness of the thermally debondable primer composition layer on a substrate may be from 20 µm to 300 µm, preferably from 30 µm to 175 µm and more preferably from 45 µm to 150 µm. These thicknesses are for a wet layer, whereas the thickness of a dry layer is about half of the wet layer thickness.

These thicknesses are ideal because they enable the deposition of the microparticles, and in addition may facilitate the peeling of the primer layer from a substrate during expansion of the thermally expandable thermoplastic microspheres.

The present invention also encompasses a cured thermally debondable primer composition according to the present invention.

The thermally debondable primer composition or cured product according to the present invention can be used in a bonded structure.

Examples of bonded structures are automotive components such as a battery, a casque and interior parts.

The present invention relates to a bonded structure comprising: a first substrate; a second substrate; a thermally debondable primer composition layer or cured product according to the present invention; and an adhesive layer, wherein the thermally debondable primer is disposed on a surface of the first substrate and/or on a surface of the second substrate and wherein the adhesive layer is placed on top of the thermally debondable primer layer.

The first and second substrates can be same or different and not limited to any particular substrate material. However, suitable substrate should have a temperature stability below debonding temperature and melting point above 100°C.

The adhesive layer of the bonded structure according to the present invention may be formed from any kind of adhesive suitable to adhere selected substrates. Suitable adhesive may be one component (1k) composition or a two component (2k) composition. Preferably the adhesive layer is formed from an adhesive selected from the group consisting of epoxy adhesives, acrylic adhesives, polyurethane adhesives, cyanoacrylate adhesives, silicone adhesives, polyimide adhesives, silane modified polymers, butyls, hotmelts and mixtures thereof.

The present invention also relates to a method of debonding said bonded structure according to the present invention, the method comprising the steps of: i) applying a heat; and, ii) debonding the surfaces.

The heat source may be a thermal source, a sonication probe or an electromagnetic source.

In the debonding method the temperature applied in step i) is from 60 to 200°C, and it is preferably applied for a duration of from 2 minutes to 60 minutes.

The duration of the required heat application depends on many factors and can be from 5 minutes to 60 minutes or from 10 minutes to 60 minutes or from 15 minutes to 60 minutes or from 20 minutes to 60 minutes.

The thermally debondable primer composition according to the present invention may be used in various e-mobility components, such as a battery lid, battery cells (cell-to-cell, cell-to-module, cell-to-body), battery modules, inverter, converter, and various structural adhesive applications and various thermally conductive applications.

### Examples

### Materials

2k epoxide resin-based LOCTITE EA9470 from Henkel AG & Co. KGaA
2k epoxide resin-based LOCTITE EA9394 from Henkel AG & Co. KGaA
2k epoxide resin based TEROSON 5056 from Henkel AG & Co. KGaA
2k polyurethane resin based TEROSON 5700 from Henkel AG & Co. KGaA
MAINCOTE 1100 from Rohm & Haas
Expancel 031DU40 from Nouryon
glass pearl (d= 1 mm) from VWR
isopropanol (iPrOH) from Labormagazin, Rötzmeier
The substrates - e-coated steel (Rocholl e-coated Stahlprüfkörper #50725) substrates size of 100 mm x 25 mm x 1.8mm. And the substrates were pre-treated by rubbing with a piece of paper soaked in iPrOH and letting dry.

### Test methods:

Lap shear strength was measured according to STM 700.
Tensile shear strength was measured according to ASTM D1002.
The tensile lap shear strength was measured according to ISO 4587.
Film thickness of 1 mm was used in the tests.

### Example 1

Thermally debondable primer composition was prepared according to components and quantities presented in table 1. The primer was prepared by adding all components into a speed mixer plastic container (PP100) and mixed for 30 seconds a 3500 RPM. The solution did not seem to be homogeneous after this time, and therefore, it was mixed one more time for 30 seconds a 3500 RPM to obtain homogenous solution.

**Table 1**

| | Wt. % |
|---|---|
| Maincote (acrylate resin) | 45 |
| Water (comes in within acrylate resin dispersion) | 45 |
| Expancel (thermoplastic microspheres) | 10 |

### LOCTITE EA 9470 adhesive preparation:

20 g of component A of LOCTITE EA9470 and 10.6 g of component B of LOCTITE EA9470 were transferred into a speed mixer plastic container (PP100) and mixed for 10 seconds at 1500 rpm using a Speed Mixer DAC 150.1 FVZ. Subsequently, two spatula spoons of glass pearls 1mm were added to the adhesive and mixed for an additional 10 seconds at 1500 rpm. The adhesive was prepared just before application, otherwise, it would have become harder, making the application process difficult/impossible.

### LOCTITE EA 9493 adhesive preparation:

This adhesive was in a cartridge, and it was applied with a cartridge gun using a static mixer. Once the adhesive was applied to the substrate, it was distributed using a wood spatula and the glass pearls were added manually. Subsequently, the two substrates were bonded.

### TERROSON PU 6700 adhesive preparation:

This adhesive was in a cartridge, and it was applied with a cartridge gun using a static mixer. Once the adhesive was applied to the substrate it was distributed using a wood spatula and the glass pearls were added manually. Subsequently, the two substrates were bonded.

### TERROSON EP 5065 adhesive preparation:

This adhesive was in a cartridge, and it was applied with a cartridge gun using a static mixer. Once the adhesive was applied to the substrate it was distributed using a wood spatula and the glass pearls were added manually. Subsequently, the two substrates were bonded.

### Pre-treated substrates were assembled using the following procedure:

The pre-treated substrates were bar-coated with 100 µm micron guide with the primer composition of example 1. The coated substrates were dried in the oven at 50°C for 10 min. Once the samples were dried, for the coated substrates, the coating thickness resulted to be 50 ± 0.4 µm. The adhesives compositions (as prepared above) were applied on the top part of the substrate for an area 2.5 cm x 0.5 cm on the same side of the primer composition of example 1 using a wooden spatula. A second specimen, not coated with the primer composition of example 1 and only cleaned with iPrOH, was first added a small amount of adhesive (2.5 cm x 0.2 cm) and faced with the first substrate containing the adhesive. After removing the excess adhesive, the substrates were locked by using two clamps. After repeating this procedure for all the substrates, all the samples were cured in the oven at 60°C overnight.

### Example 2

Evaluation of tensile shear strength in the range temperature of from -40°C to 80°C.

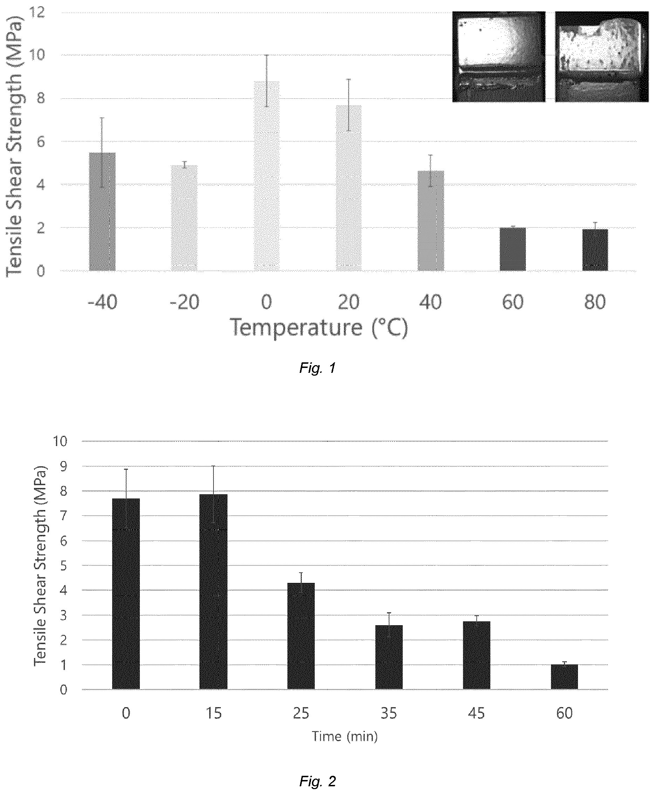

The lap shear strength of LOCTITE EA9470 on the primer composition of example 1 layer on e-coated steel substrate was measured in the temperature range of from -40°C to 80°C. This is illustrated in Figure 1.

### Example 3

Evaluation of the time exposure at 100°C on the primer foaming process.

It was evaluated how long the substrate needed to be exposed to temperature to have a significant tensile strength reduction. LOCTITE EA9470 adhesive and the primer composition of example 1 were tested and the results are illustrated in Figure 2.

### Example 4

Tensile lap shear strength comparison of primer composition of example 1 in combination with different structural adhesives.

The primer composition of example 1 was used in combination with two different structural adhesives.

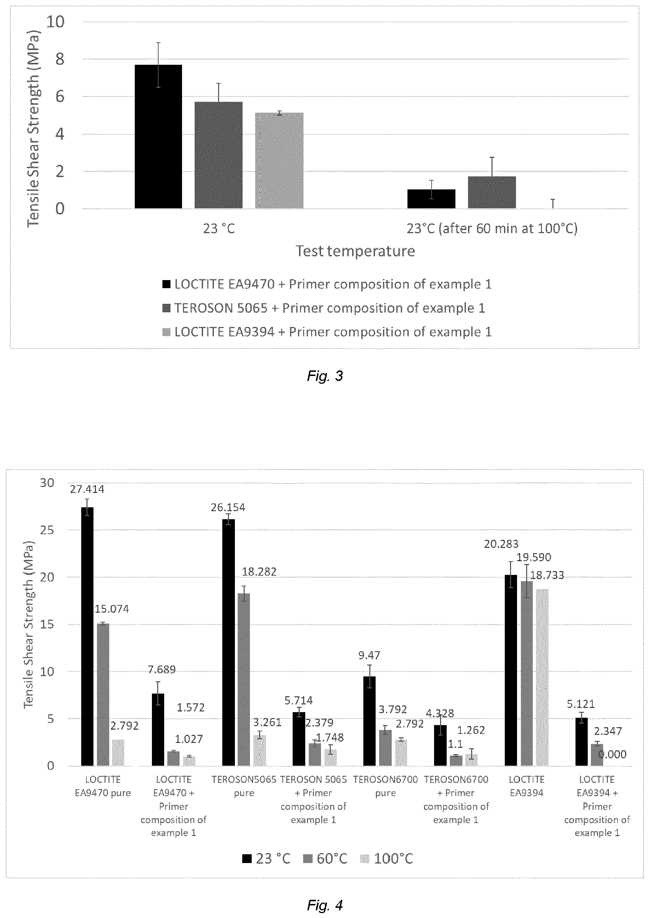

(TEROSON EP 5056 and LOCTITE EA 9394) to compare the results with the LOCTITE EA 9470. Tensile lap shear strength was measured before the thermal treatment at 100°C (left), and after 60 min of thermal treatment (right) The results are illustrated in figure 3. The primer according to the present invention works well also for the other adhesives, recording a significant drop in the tensile shear strength after thermal exposure.

### Example 5

Tensile lap shear strength comparison of primer composition of example 1 in combination with different structural adhesives in different temperatures.

The primer composition of example 1 was used in combination with four different structural adhesives (TEROSON EP 5056, TEROSON EP 5700, LOCTITE EA 9470 and LOCTITE EA 9394) to compare the results with the respective adhesive only. Tensile lap shear strength was measured after exposure of three different temperatures 23°C (30 min), 60°C (30 min) and 100°C (60 min). The results are illustrated in figure 4. The primer according to the present invention works well also for the other adhesives, recording a significant drop in the tensile shear strength after thermal exposure in all elevated temperatures.

## Claims

1. A thermally debondable primer composition comprising
a) from 28 to 70% by weight based on the total weight of the composition of an acrylate resin;
b) from 28 to 70% by weight based on the total weight of the composition of water;
c) from 1 to 25% by weight based on the total weight of the composition of thermally expandable thermoplastic microspheres; and
d) from 0 to 5%, preferably from 0.25 to 3.0% by weight based on the total weight of the composition of a coalescing solvent.

2. The thermally debondable primer composition according to claim 1, wherein the acrylate resin comprise one or more copolymerized ethylenically unsaturated monomers selected from the group consisting of methyl acrylate, ethyl acrylate, butyl acrylate, 2-ethylhexyl acrylate, nonyl acrylate, decyl acrylate, lauryl acrylate, hydroxyethyl acrylate, hydroxypropyl acrylate, methyl methacrylate, ethyl methacrylate, butyl methacrylate, nonyl methacrylate, isodecyl methacrylate, lauryl methacrylate, hydroxyethyl methacrylate, hydroxypropyl methacrylate, (meth)acrylonitrile, styrene, substituted styrene, butadiene, ethylene, propylene, 1-decene, vinyl acetate, vinyl butyrate, vinyl versatate, vinyl chloride and vinylidene chloride, and mixtures thereof.

3. The thermally debondable primer composition according to claim 1 or claim 2, wherein the acrylate resin is present from 38 to 60% by weight based on the total weight of the composition, preferably from 42 to 49.5%, more preferably from 45 to 49.5%.

4. The thermally debondable primer composition according to any of claims 1 to 3, wherein water is present from 38 to 60% by weight based on the total weight of the composition, preferably from 42 to 49.5%, more preferably from 45 to 49.5%.

5. The thermally debondable primer composition according to any of claims 1 to 4, wherein the thermally expandable thermoplastic microspheres have a core-shell structure, and wherein the shell is formed from cross-linked polymer and the core is composed of a blowing agent.

6. The thermally debondable primer composition according to any of claims 1 to 5, wherein the thermally expandable thermoplastic microspheres expand when exposed to a heat, preferably exposed to a heat of from 60 to 200°C, preferably from 80 to 160 °C, more preferably from 80 to 120°C.

7. The thermally debondable primer composition according to any of claims 1 to 6, wherein the thermally expandable thermoplastic microspheres have a particle size from 5 to 100 µm, preferably from 8 to 75 µm, preferably from 9 to 50 µm, more preferably from, 10 to 30 µm, more preferably from 12 to 20 µm, and even more preferably from 13 to 19 µm, wherein the particle size is measure by laser diffraction (Low Angle Laser Light Scattering LALLS).

8. The thermally debondable primer composition according to any of claims 1 to 7, wherein the thermally expandable thermoplastic microspheres are present from 2 to 15% by weight based on the total weight of the composition.

9. The thermally debondable primer composition according to any of claims 1 to 8, wherein the coalescing solvent is selected from the group consisting of dipropylene glycol n-butylether, propylene glycol n-butyl ether, propylene glycol n-propyl ether, propylene glycol phenyl ether, ethylene glycol hexyl ether, diethylene glycol hexyl ether, 2,2,4-trimethyl-1,3-pentanediol monoisobutyrate, propylene glycol methyl ether, ethylene glycol n-butyl ether, and mixture thereof, preferably the coalescing solvent is dipropylene glycol n-butylether.

10. Cured thermally debondable primer composition according to any of claims 1 to 9.

11. Use of thermally debondable primer composition according to any of claims 1 to 9 or cured product according to claim 10 in a bonded structure.

12. A bonded structure comprising:
a first substrate;
a second substrate;
a thermally debondable primer composition layer according to any one of claims 1 to 9 or cured product layer according to claim 10; and
an adhesive layer,
wherein the thermally debondable primer is disposed on a surface of the first substrate and/or on a surface of the second substrate and wherein the adhesive layer is placed on top of the thermally debondable primer layer.

13. The bonded structure according to claim 12, wherein the adhesive layer is formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

14. A method of debonding said bonded structure according to claims 12 or 13, the method comprising the steps of:
i) applying a heat; and,
ii) debonding the surfaces.

15. A method according to the claim 14, wherein the temperature applied in step i) is from 60 to 200°C, and it is preferably applied for a duration of from 2 minutes second to 60 minutes.
